# EUROPEAN PATENT APPLICATION

(11) **EP 1 679 224 A1**
(43) Date of publication of application: **12.07.2006**
(21) Application number: 06075036.1
(22) Date of filing: 06.01.2006
(51) Int. Cl.: B60N 2/28, A47D 13/02

(54) **Infant carrier**

(30) Priority: 11.01.2005 NL 1027994; 09.02.2005 NL 1028226
(71) Applicant: Van de Heuvel, Buddy, 5702 RJ Helmond (NL)
(72) Inventor: Van de Heuvel, Buddy, 5702 RJ Helmond (NL)
(74) Representative: Verhees, Godefridus Josephus Maria

(57) **Abstract**

A child seat 1 has a seat 3 and a carrying handle 5 that is a part of the means of carrying in order to carry the child seat. Furthermore, the means of carrying has a means of hanging 7 with which the child seat can be hung on an object, for example, a belt on one's body or on a shopping cart.

The means of hanging 7 is situated on one side 9 of the child seat 1 and is connected to the carrying handle 5. The means of hanging is made up of a hook 11 and a carrying belt 13 provided with a ring 15, which can be coupled to the hook. With this, the child seat can easily be carried or hung on an object.

The child seat 1, furthermore, has a cushion 17 that is attached to the side 9 of the seat 3 and can be removed with which the child seat rests against the carrier's hip or the side of a shopping cart. The cushion sees to it that the seat 3 remains in an upright position and does not hang at an angle.

## Description

### BACKGROUND OF THE INVENTION:

### Field of the invention

The invention relates to a portable child seat comprising a seat as well as a means of carrying in order to carry the child seat, which means of carrying comprises a carrying handle that is connected to the seat, as well as means of hanging with which the child seat can be hung on an object.

### Prior art

Such a child seat is known from the international patent application WO 01/12121 A. With this known child seat the means of hanging is a shoulder strap which is mounted on the carrying handle and with which the child seat can be hung on one's shoulder.

### Summary of the invention

An objective of the invention is to provide a portable child seat of the type described in the preamble that can be carried more easily than the known child seat. To this end, the child seat according to the invention is characterized in that the means of hanging comprises a hook that is fastened to the carrying handle or is a part of the carrying handle, in which the hook and the fastening have been made in such a way that the child seat can be hung on an object with them, whether a child is in the seat or not. Because of this, it is not necessary for the child seat to be hung on one's shoulder; it can also be hung on a belt round one's waist, for example.

It is noted that a child car seat is known from the international patent application WO 99/54161 A which is provided with a seat with a carrying handle that can pivot fastened to it, in which a hook is situated on the carrying handle at the halfway point of the distance between the pivot point of the carrying handle and that part of the carrying handle furthest from the seat. However, in this document, the hook is shown in just one of the drawings and it is not described at all. From this document, it is not known that the child car seat can be hung up using this hook and also that this hook is suitable (that is, strong enough) for hanging the child car seat on an object.

Furthermore, it is noted that from US patents 5.540.365 and 6.378.937 child seats are known that are provided with a belt/cord with which the child seat can be carried on one's shoulder.

In order to hang the child seat according to the invention easily, an embodiment of the child seat is characterized in that the hook is situated at or nearby the pivot point of the carrying handle on the seat.

Preferably, the distance between the hook and the pivot point of the carrying handle on the seat is less than one third of the distance from this pivot point to that part of the carrying handle that is furthest away from this point.

In order to prevent the child seat from falling should the means of hanging suddenly and undesirably come loose from the carrying belt, the means of hanging is preferably situated on the inner side of the carrying handle.

A further embodiment of the portable child seat according to the invention is characterized in that the hook is an opening situated in the carrying handle.

Still a further embodiment of the portable child seat according to the invention is characterized in that the child seat, furthermore, comprises a means of support which during use rests against the object on which the child seat is hung, and which is such that when in use keeps the child seat in an upright position. When in use, the means of support is in contact with the carrier's body or a side of a shopping cart and sees to it that the child seat remains in an upright position and does not hang at an angle. The means of support is preferably a rigid cushion or a rigid strip, which is mounted on the side of the seat.

It is noted that a child seat is known from the American patent US 5.540.365 which is provided with a carrying belt for carrying on the shoulder and a hip cushion to make carrying more pleasant. This cushion is, however, soft and cannot serve to keep the child seat according to the invention upright.

### Brief description of the drawings

The invention will be elucidated more fully below on the basis of drawings in which embodiments of the portable child seat according to the invention are shown. In these drawings:
Figure 1 shows a first embodiment of the portable child seat according to the invention fitted with a carrying belt that is executed as a shoulder strap;
Figure 2 shows the child seat coupled to a shopping cart; and
Figure 3 shows a second embodiment of the portable child seat according to the invention fitted with a carrying belt that is executed as a hip belt.

### Detailed description of the drawings

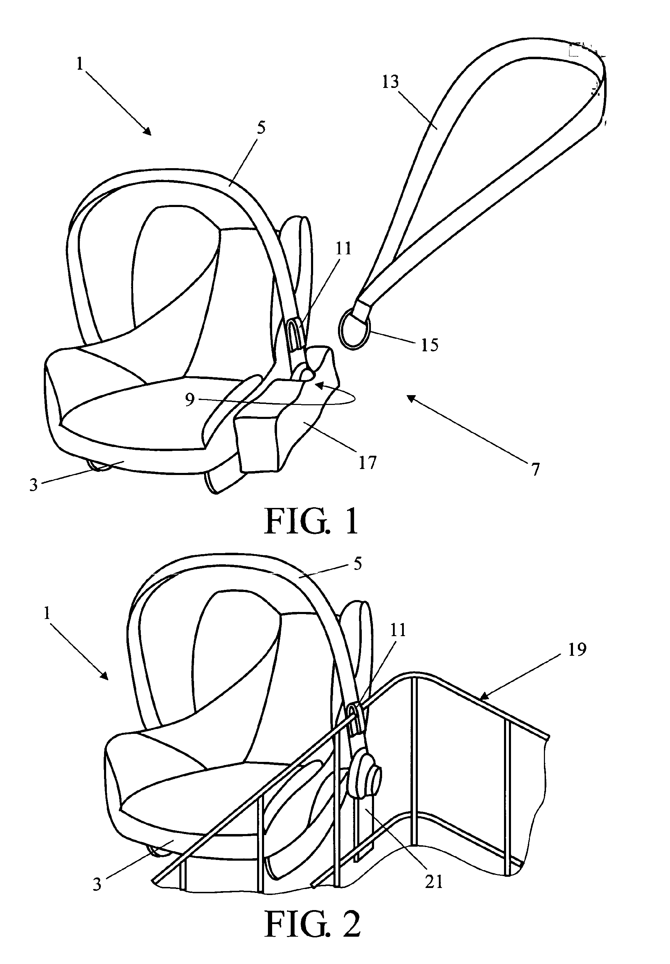

In figure 1 a first embodiment of the portable child seat according to the invention is shown. The child seat 1 has a seat 3 as well as a carrying handle 5 connected to the seat which is part of the means of carrying in order to carry the child seat. The means of carrying has, in addition to the carrying handle, furthermore, a means of hanging 7 with which the child seat can be hung on an object, for example, a belt on one's body or a shopping cart (see figure 2).

The means of hanging 7 is situated on a side 9 of the child seat 1 and is attached to the carrying handle 5. The means of hanging 7 is a means of coupling which consists of a hook 11 and a means of carrying executed as a shoulder strap 13, which is provided with a ring 15 that can be coupled to the hook. Because of this, the child seat can easily be carried on one's shoulder.

The child seat 1, furthermore, has a detachable cushion 17 that is mounted on the side 9 of the seat 3 and is a means of support with which the child seat rests against the carrier's hip or the side of a shopping cart. The cushion sees to it that the seat 3 remains upright and does not hang at an angle.

In figure 2 the same child seat 1 is shown, but it is now hanging on the side of a shopping cart 19 (partially shown in the drawing). Instead of a cushion, the means of support is a rigid strip 21 which is fastened to the seat 3 or the carrying handle 5.

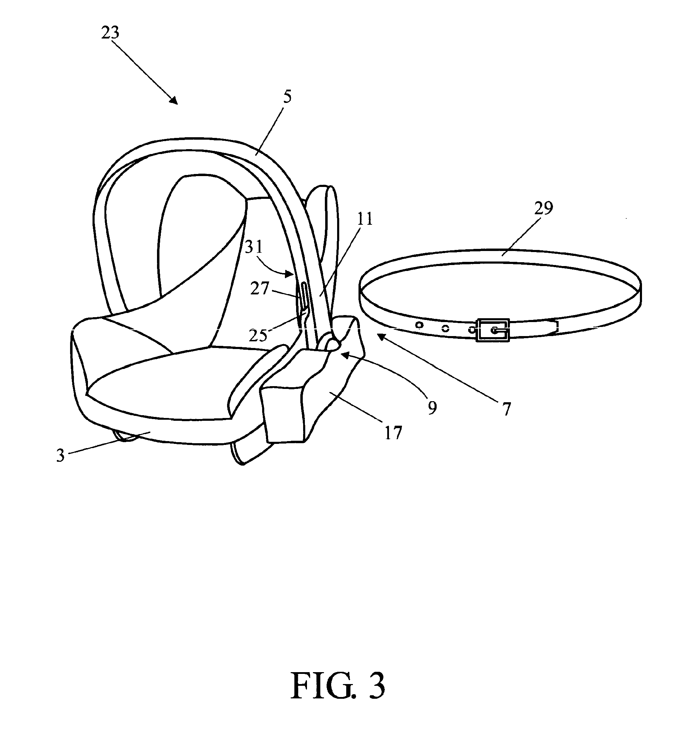

In figure 3 a second embodiment of the portable child seat 23 according to the invention is shown. All parts that are the same as those of the first embodiment or which have the same function are shown with the same reference number. In this embodiment the means of hanging 7 is an opening 25 in the carrying handle 5, as a result of which a hook 27 is made that is a part of the carrying handle 5. A carrying belt, executed here as a hip belt 29, can be fitted behind the hook 27 in the opening 25. The opening 25 is situated in the inner side 31 of the carrying handle 5 as a result of which the child seat 23 cannot fall, but catches along with the carrying handle 5 behind the hip belt 29, should the hip belt 29 unexpectedly slip out of the opening 25.

Although in the above the invention is explained on the basis of the drawings, it should be noted that the invention is in no way limited to the embodiments shown in the drawings. The invention also extends to all embodiments deviating from the embodiments shown in the drawings within the context defined by the claims. Thus, the hook may also be attached to the seat instead of the carrying handle. It is also possible for the hook to be attached to the inner side of the carrying handle instead of the outer side. The hook can also be connected to the carrying handle or the seat in such a way that it is detachable. The means of coupling can also be executed in another way instead of as a hook, for example, as a click system, or as small belts.

## Claims

1. Portable child seat (1; 23) comprising a seat (3) as well as a means of carrying in order to carry the child seat, which means of carrying comprises a carrying handle (5) connected to the seat, as well as means of hanging (7) with which the child seat can be hung on an object, **characterized in that** the means of hanging comprises a hook (11; 27) that is fastened to the carrying handle (5) or is a part of the carrying handle, in which the hook and the fastening have been made in such a way that the child seat (1; 23) can be hung on an object with them, whether a child is in the seat or not.

2. Portable child seat (1; 23) according to claim 1, **characterized in that** the hook (11; 27) is situated at or near the pivot point of the carrying handle (5) on the seat (3).

3. Portable child seat (1; 23) according to claim 2, **characterized in that** the distance
between the hook (11; 27) and the pivot point of the carrying handle (5) on the seat (3) is less than one third of the distance from this pivot point to that part of the carrying handle (5) that is furthest away from this point.

4. Portable child seat (23) according to claim 1, 2 or 3, **characterized in that** the means of hanging (7) is situated on the inside (31) of the carrying handle (5).

5. Portable child seat (23) according to one of the preceding claims, **characterized in that** the hook is an opening (25) situated in the carrying handle (5).

6. Portable child seat (1; 23) according to one of the preceding claims, **characterized**
**in that** the child seat, furthermore, comprises a means of support which during use rests against the object on which the child seat is hung, and is such that when in use keeps the child seat in an upright position.

7. Portable child seat (1; 23) according to one of the preceding claims, **characterized in that** the means of support is a rigid cushion (17) or a rigid strip (21) which is mounted on the side of the seat.
